# EUROPÄISCHE PATENTSCHRIFT

(11) **EP 1 374 701 B1**
(45) Veröffentlichungstag und Bekanntmachung des Hinweises auf die Patenterteilung: **29.12.2004**
(21) Anmeldenummer: 03009645.7
(22) Anmeldetag: 30.04.2003
(51) Int. Cl.: A23L 1/212, A23L 1/015, A23L 1/307

(54) **Verfahren zur Modifizierung der Inhaltsstoffzusammensetzung von pflanzlichen Produkten, insbesondere Früchten, wie Sultaninen, Sanddorn, Apfelbeeren oder Moosbeeren**
Method for modifying the composition of the ingredients of plant products, in particular fruits like sultana, sea buckthorn, chokeberry or cranberry
Méthode pour modifier la composition des ingrédients de produits végétaux, particulièrement des fruits comme des raisins, des argusiers, des aronies ou des airelles rouges

(30) Priorität: 25.06.2002 DE 10228922
(43) Veröffentlichungstag der Anmeldung: 02.01.2004
(73) Patentinhaber: IGV Institut für Getreideverarbeitung GmbH, 14558 Bergholz-Rehbrücke (DE)
(72) Erfinder: Jank, Rüdiger, Dipl.-Ing., 13158 Berlin (DE); Sprengel, Friedrich, Dr., 31008 Elze, OT Mehle (DE); Zehle, Günter, Dipl.-Ing., 14558 Bergholz-Rehbrücke (DE)
(74) Vertreter: Heyner, Klaus, Dr.-Ing.

(56) Entgegenhaltungen:
- US-A- 3 833 747
- US-A- 3 992 983

## Beschreibung

Die Erfindung bezieht sich auf ein Verfahren zur Modifizierung der Inhaltsstoffzusammensetzung von nativen oder vorbehandelten pflanzlichen Produkten oder Pflanzenteilen, insbesondere Früchten, wie Sultaninen, Sanddorn, Apfelbeeren oder Moosbeeren. Unter Modifizierung ist dabei sowohl die Entfernung als auch das Hinzufügen von bestimmten Inhaltsstoffen sowie auch die Substitution einzelner Stoffe zu verstehen.

Die natürliche Nährstoffzusammensetzung vieler Pflanzen und Pflanzenteile, wie z.B. Früchte, Samen, Blätter oder Wurzeln bzw. daraus hergestellter oder verwendeter pflanzlicher Produkte, wie z.B. Früchte, Trockenobst oder Gemüse stellt für die Menschen eine geeignete Quelle für den täglichen Bedarf an notwendigen Vitaminen, Ballaststoffen und Nährstoffen dar.

Der prophylaktische Einfluss eines regelmäßigen Verzehrs an Obst und Gemüse ist seit langem bekannt und nachweislich belegt. Wegen der ausgezeichneten sensorischen Eigenschaften und der regelmäßigen Verfügbarkeit dienen Obst und Gemüse nicht nur als wichtige Nahrungsquelle, sondern darüber hinaus auch aufgrund bestimmter Inhaltsstoffe als Heilmittel bei Erkrankungen.

Ungeachtet der vielen Vorteile ergeben sich auch einige Nachteile dahingehend, dass bestimmte Inhaltsstoffe negative Auswirkungen auf den Gesundheitszustand einiger Bevölkerungsgruppen besitzen. Zu nennen sind beispielsweise Erkrankungen wie Diabetes, Allergien oder Herz-Kreislauf-Erkrankungen.

So kann sich das spezifische Zuckerspektrum einiger nativer Früchte und daraus gewonnene Trockenfrüchte nachteilig auf vorgenannte Krankheitsbilder auswirken. Die betroffenen Bevölkerungsgruppen können diese Produkte nicht oder nur in geringem Umfang verzehren. So sind Rosinen, Sultaninen oder Korinthen durch einen hohen Anteil an Glucose gekennzeichnet und für Diabetiker nur eingeschränkt zu konsumieren.

Da in vielen Lebensmitteln, wie Müsli oder Backwaren, im erweiterten Sinne ebenfalls diese Früchte mit den immanenten Inhaltsstoffen verarbeitet werden, ist der Verzehr auch dieser Produkte für die betroffenen Bevölkerungsgruppen gleichfalls bedenklich.

Aus dem Stand der Technik ist bereits bekannt, dass z.B. durch eine Wässerung von Rosinen der Gehalt an Glucose und Saccharose gesenkt wird. Nachteilig auf die Prozessführung wirken sich dabei die kontinuierlich steigende Zuckerkonzentration im Lösungsmittel, die unvollständige Zuckereliminierung und der zeitlich hohe Aufwand durch sich stetig verlangsamende Konzentrationsausgleichsvorgänge aus. Außerdem sind die nach dem herkömmlichen Verfahren behandelten Produkte sensorisch nicht mit den Ausgangsprodukten vergleichbar. Sowohl Farbe und Geschmack weisen zum Teil stark vom unbehandelten Original ab, und die Erwartungen der Verbraucher werden somit häufig nicht erfüllt.

Ergänzend zu den genannten Nachteilen sei erwähnt, dass durch den Zuckerverlust die Wasseraktivität steigt und damit die mikrobiologische Stabilität der behandelten Früchte und der diese enthaltenden Produkte sinkt.

Ein weiterer Nachteil des aufgeführten Verfahrens ist die Verringerung der sensorischen Fruchtqualität und des Fruchtgewichtes. Sofern diese Früchte selbst in getrocknetem Zustand in Backwaren, wie zum Beispiel in Stollen, eingesetzt werden, so ist trotzdem eine geringere Haltbarkeit und Gesamtqualität zu verzeichnen und eine Frischhaltung der Produkte, mit den bekannten Nachteilen zusätzlicher Aufwendungen, wird erforderlich.

Aus der US 3,992,983 ist ein Verfahren zur Herstellung eines Teeextraktes bekannt, bei dem die aus den Teeblättern extrahierten Inhaltstoffe aus der Extraktionszone kontinuierlich oder diskontinuierlich entfernt werden. Es schließt sich eine Aufbereitung des angereicherten Extraktionsmittels zur Gewinnung des Extraktes an, in deren Ergebnis ein Teeextrakt entsteht, der an Stelle von Blatttee zur Bereitung des Getränks einsetzbar ist.
In der US 3,833,747 wird ein Verfahren zur Verringerung der Hygroskopizität von dehydrierten Früchten offenbart, bei dem in hintereinander geschalteten Prozessen zunächst die hygroskopischen Monosaccharide osmotisch aus den Fruchtstücken entfernt und diese anschließend durch weniger hygroskopische Saccharose ersetzt wird.

Es ist weiterhin bekannt, dass durch mehrstufige Diffusionsvorgänge der Saccharosegehalt von Früchten, wie z.B. Kirschen, soweit erhöht wird, dass diese Produkte mikrobiologisch nahezu stabil sind. Nachteilig hierbei ist, dass die nach diesem Verfahren behandelten Früchte keinen nennenswerten ernährungsphysiologischen Wert aufweisen und nur als Belegfrüchte in Konditorei- oder Süßwarenerzeugnissen zur Verbesserung des optischen Effektes Verwendung finden.

Die Aufgabe der vorliegenden Erfindung besteht somit darin, ein Verfahren zur Modifizierung von pflanzlichen Produkten zur Verfügung zu stellen, bei welchem das Verfahrensprodukt in seiner äußeren Form und Gestalt weitgehend unverändert bleibt, die Sensorik und die ernährungsphysiologisch bedeutsame Inhaltsstoffzusammensetzung dem gewünschten Verwendungszweck entsprechen und gegebenenfalls bestimmte Inhaltsstoffe aus dem Produkt entfernt oder auch zusätzlich Inhaltsstoffe in die Struktur des Produktes eingebracht werden.

Die Aufgabe wird erfindungsgemäß durch ein Verfahren zur Modifizierung der Inhaltsstoffzusammensetzung von pflanzlichen Produkten gelöst, bei welchem unter Ausnutzung des osmotischen Druckgefälles zwischen dem Inneren pflanzlicher Produkte und diese umgebenden Lösungen Inhaltsstoffe aus den Produkten in das Lösungsmittel diffundieren, wobei gleichzeitig die Menge der Inhaltsstoffe, bezogen auf die Produkte und das Lösungsmittel, verringert wird. Die parallel zur Diffusion ablaufende Eliminierung der diffundierenden Komponenten sorgt für ein wirksames osmotisches Druckgefälle während der Diffusion.

Die Aufgabe wird dadurch gelöst, dass die Diffusions- und Osmosevorgänge in Verbindung mit Fermentationsvorgängen durchgeführt werden.

Nach der Konzeption der Erfindung wird die Osmose der unerwünschten Inhaltsstoffe durch die parallel ablaufenden fermentativen Vorgänge unterstützt.

Die Inhaltsstoffzusammensetzung von pflanzlichen Produkten wird dabei so verändert, dass bestimmte Inhaltsstoffe aus den pflanzlichen Strukturen in das umgebende Lösungsmittel durch die Pflanzenhaut oder -schale diffundieren. Dieser Diffusionsprozess ist dabei von den Fruchtinhaltsstoffen, der pflanzlichen Struktur einschließlich der Pflanzenhaut oder -schale und vom Konzentrationsgefälle zwischen den Inhaltsstoffen des Produkts und derer des umgebenden Lösungsmittels abhängig. Die Diffusionsprozesse laufen weiterhin bei höherer Temperatur schneller ab.

Im weiteren Verlauf der Prozessführung wird dieses Konzentrationsgefälle und damit das osmotische Druckgefälle erfindungsgemäß kontinuierlich groß gehalten, sofern parallel zum Diffusionsprozess ein Eliminierungsprozess, als Fermentationsprozess abläuft, der die diffundierenden Fruchtinhaltsstoffe umgehend osmotisch unwirksam macht.

Sofern der diffundierende Inhaltsstoff ein Zucker ist, werden im Fermentationsprozess beispielsweise zuckerabbauende Enzyme oder diesen Zucker verstoffwechselnde Mikroorganismen, wie Hefen oder Bakterien, verwendet. Dabei bestimmt dann der Fermentationsprozess aufgrund der optimalen Arbeitstemperaturen für die Enzyme oder Mikroorganismen die Temperaturführung des Diffusionsprozesses.

Dabei liegt die Temperaturobergrenze bei der Inaktivierungstemperatur der Enzyme und Mikroorganismen üblicherweise bei 65-75°C.

Gemäß einer vorteilhaften Ausführungsform kann auch der Konzentrationsausgleich durch Diffusion für bestimmte Fruchtinhaltsstoffe gezielt vermieden werden. Oftmals besteht nur die Notwendigkeit der partiellen Diffusion, wenn gewünschte Fruchtinhaltsstoffe erhalten bleiben sollen.

Zweckmäßigerweise wird dabei dem Lösungsmittel der bestimmte Inhaltsstoff oder ein diesem Stoff osmotisch ähnlicher mit dem Ziel zugegeben, dass der im Produkt gewünschte Inhaltsstoff nicht an den Diffusionsvorgängen beteiligt werden soll. Die Diffusion kann somit gezielt unterbunden werden, da der Konzentrationsunterschied die Haupttriebskraft für die Diffusion ist. Auf diese Weise können Fruchtsäuren oder Aromastoffe in den Produkten erhalten werden.

Die durch Osmose entzuckerten, wasserhaltigen Früchte werden anschließend in eine Lösung eingebracht, die mit diffusionsfähigen Stoffen aufkonzentriert ist, die dem Produkt wunschgemäß zugesetzt werden sollen.
Der Konzentrationsausgleich erfolgt dabei vom Lösungsmittel an das Fruchtinnere bei einer Prozesstemperatur von bis zu 90°C.
Verfahrensgemäß kann zur weitgehenden Ausnutzung der osmotischen Wirkungen das Konzentrationsgefälle durch kontinuierliche Eindickungen oder Zumischungen mindestens konstant gehalten werden. Günstig ist eine stetig steigende Konzentrationserhöhung.
Im abschließenden Behandlungsschritt können die erhaltenden Produkte durch Veredlungs- oder Nachbehandlungsprozesse, wie z.B. einer Trocknung, so aufgearbeitet werden, dass sie dem gewünschten Verwendungszweck entsprechen.

Weitere Einzelheiten, Merkmale und Vorteile der Erfindung ergeben sich aus der nachfolgenden Beschreibung eines Ausführungsbeispieles mit Bezugnahme auf die zugehörige Zeichnung. Es zeigt:

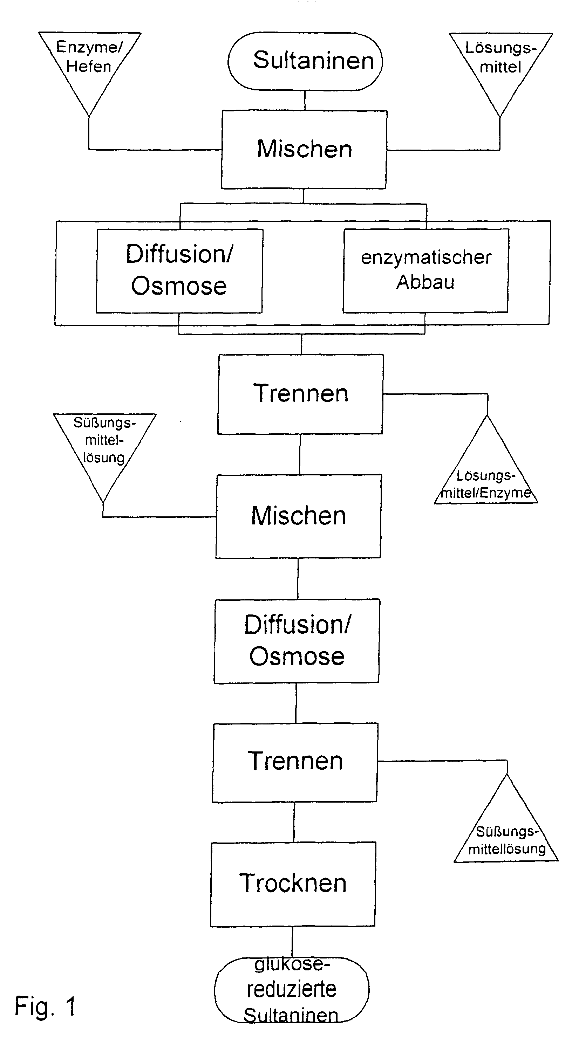

- Fig. 1:: Verfahrensflussdiagramm zur Herstellung von glucosereduzierten bzw. glucosefreien Sultaninen.

Am Beispiel der Herstellung von glucosereduzierten Diätsultaninen aus handelsüblichen Sultaninen mit einem Glucosegehalt von durchschnittlich 35 % Massenanteil soll die Inhaltsstoffmodifizierung erläutert werden.

Dabei wird davon ausgegangen, dass die Sultaninen neben Glucose auch Fructose und geringe Mengen Saccharose als Zucker enthalten. Gemäß dem nachfolgenden erfindungsgemäßen Verfahren wird die Glucose gezielt reduziert bzw. gänzlich entfernt.

Erfindungsgemäß besteht das Verfahren aus nachfolgenden Schritten:
a) Mischen von Sultaninen und Wasser als Lösungsmittel mit einer Konzentration von 10 bis 30 Massenprozent Sultaninen im Wasser,
b) Diffusion der Zucker, wie Glucose, Fructose und Saccharose in das Lösungsmittel und gleichzeitiger Abbau durch die Zugabe von zumindest Glucose ab- oder umbauenden Enzymen und/oder zumindest die Glucose verstoffwechselnden Mikroorganismen und Diffusion von Lösungsmittel und teilweise von Enzymen in die Sultaninen,
c) Trennung der glucosereduzierten Sultaninen vom Lösungsmittel,
d) Mischen von glucosereduzierten Sultaninen mit einer diabetikergerechten Süßungsmittellösung,
e) Diffusion der Süßungsmittellbestandteile in die Sultaninen,
f) Trennen der glucosereduzierten und süßungsmittelangereicherten Sultaninen von der Süßungsmittellösung,
g) Trocknung der glucosereduzierten und süßungsmittelangereicherten Sultaninen.

Im ersten Verfahrensschritt wird das Sultaninengut im Lösungsmittel Wasser eingeweicht und gegebenenfalls durch Diffusion teilweise entzuckert. Anschließend werden Enzyme oder Glucose verstoffwechselnde Hefen, wie *Saccharomyces cerevisiae,* zugegeben. Beim Einsatz von *Saccharomyces cerevisiae* werden die Hefen in einer Konzentration von 0,3 bis 3,5 Massenprozent, bezogen auf die Gesamtmasse, eingesetzt. Die Temperatur beträgt dabei vorzugsweise 30-35°C.

Nach einer bevorzugten Ausführungsform der Erfindung enthält die enzymaktive Flüssigkeit Enzyme bzw. Enzymkomplexe, wie Glucoseoxidasen oder Glucoseisomerasen, welche gezielt und partiell Glucose aus dem Zuckergemisch abbauen. Diese Enzyme diffundieren ihrerseits teilweise in die Sultaninen, so dass der Abbau der Glucose sowohl innerhalb der Frucht als auch außerhalb der Frucht stattfindet.

Beim Einsatz von Hefen zur Verstoffwechselung des Zuckers und insbesondere der Glucose wird diese zu Kohlendioxid und Alkohol abgebaut. Ebenso kommt es zur Diffusion von Enzymen bzw. Enzymkomplexen, wie Glucoseoxidasen oder Glucoseisomerasen der Hefen, in die Sultaninen, so dass der Abbau der Glucose wiederum innerhalb der Frucht als auch außerhalb der Frucht stattfindet. Um den Effekt des gezielten spezifischen Abbaues der Glucose noch zu verstärken, werden nach einer weiteren vorteilhaften Ausführungsform der Erfindung zusätzlich Glucose ab- oder umbauende Enzyme dem Lösungsmittel zugesetzt.

Die Haupttriebskräfte der osmotischen Diffusionsvorgänge sind der Konzentrationsunterschied des Zuckers zwischen der Lösung und dem Fruchtinneren. Weitere Parameter sind die Temperatur und die Prozessdauer. Der Mazerationsprozess kann beschleunigt werden, indem die Durchlässigkeit der Produkthaut oder -schale durch eine mikrofeine Perforation erhöht wird und/oder die Dicke der Produkthaut oder -schale reduziert wird. Bei Weinbeeren kann dies mit einer Behandlung von etwa 10 min in 1-2 molarer Kalilauge (KOH) realisiert werden. Die dabei auftretende Ab- bzw. Auflösung der natürlichen Wachsschicht beschleunigt zudem den patentgemäßen Prozess. Diese Behandlung wird vor dem Einweichen der Sultaninen vorgenommen, gegebenenfalls kann noch mit schwach-sauren Lösungen nachfolgend neutralisiert bzw. mit klarem Wasser gründlich gespült werden.

Durch eine temperaturgesteuerte Prozessführung kann bei Temperaturen über 75°C die Gewebestruktur der Produkthaut oder -schale denaturiert und aufgelockert werden, was sich vorteilhaft auf die qualitative und auch quantitative Eliminierung des Zuckers auswirkt. Denn einerseits kann sich damit die Menge und andererseits auch die Größe der transferierten Moleküle erhöhen.

Es wurde durch vielfache Versuche überraschenderweise festgestellt, dass bei gleichzeitiger überlagerter Diffusion und Fermentation der Zucker und insbesondere der Glucose durch Diffusionsprozesse sowohl Wasser als auch Enzyme aus dem Lösungsmittel in die Sultaninen gelangt. Durch den Fermentationsprozess in den Sultaninien wird deren Form und Zusammensetzung so verändert, dass die farbliche und optische Gestalt der Weinbeeren wieder annähernd erhalten wird. Die Sultaninen werden wieder hellgelb und rund durch Flüssigkeitsanreicherung und bilden so das Diffusionspotenzial für den nachfolgenden Verfahrensschritt.

Im anschließenden Verfahrensschritt wird eine entgegengerichtete osmotische Druckdifferenz zwischen der Zucker- und Süßungsmittellösung und dem entzuckerten, wasserreichen, großvolumigem Sultaninengut geschaffen.

Die wasserreichen, entzuckerten und großvolumigen Früchte werden in eine diabetikergerechte Süßungsmittellösung eingebracht, die vorzugsweise eine Ausgangsdichte von etwa 1,320 g/ml und eine Temperatur von 50-90°C aufweist. Zur Anwendung kommt eine Süßungsmittellösung, die vorzugsweise aus 150,0 Massenprozent kristalliner Fructose, 150,0 Massenprozent kristallinem Sorbit, bezogen auf 100,0 Massenprozent Wasser, hergestellt wurde.
Als Süßungsmittellösung finden weiterhin Süßstoffe, wie Saccharin, Cyclamat oder Monellin und/oder Zuckeraustauschstoffe, wie Mannit, Fructose, Oligofructose, Sorbit oder Xylit sowie Kombinationen von Süßstoffen und Zuckeraustauschstoffen Anwendung.

Die Zucker- und Süßungsmittelmoleküle diffundieren hierbei, getrieben durch die osmotische Druckdifferenz, durch die Fruchthaut in das Fruchtinnere und das in den Früchten enthaltene Wasser in die Süßungsmittellösung.

In diesem Entwässerungsprozess wird die Form der Weinbeere kleiner und nähert sich der Form der getrockneten Weinbeere, insbesondere Sultanine, an. Der Wassergehalt der Produkte ist dabei abhängig von den Prozessbedingungen, wie Konzentrationsgefälle, Temperatur- und Prozessdauer und beträgt etwa 25,0 bis 35,0 Massenprozent.

Im nächsten Verfahrensschritt werden die Sultaninen zur Sicherung ihrer Haltbarkeit vorzugsweise thermisch getrocknet. Dabei wird Umluft mit einer Strömungsgeschwindigkeit von etwa 1-3 m/s, einer Lufttemperatur von 100-130°C und einer Prozessdauer zwischen 80 bis 100 min eingesetzt.

Neben dem Wasserentzug werden dabei auch die am oder im Produkt verbliebenen Enzyme aus dem Fermentationsprozess inaktiviert.

Die Trocknung erfolgt bis zu einer Feuchte von maximal 20 Massenprozent Wasseranteil, vorzugsweise auf eine Feuchte von 16 Massenprozent. Es wird ein a_{W}-Wert von ca. 0,70 erreicht.

Dabei nehmen die Sultaninen wieder die typische dunkle braune Farbe der Ausgangsprodukte an und sind weder optisch noch geschmacklich von diesen zu unterscheiden.

Die Produktausbeute liegt bei mehr als 90 Massenprozent, bezogen auf die Masse der Ausgangssultaninen.

Erfindungsgemäß können auch glucosereduzierte Sultaninen direkt aus Weinbeeren hergestellt werden. Hierbei werden vorzugsweise nicht vollständig ausgereifte Weinbeeren eingesetzt, deren Zuckergehalt noch gering ist.
Nach dieser Ausführungsform der Erfindung muss der osmotischen Entzuckerung und Fermentation eine intensive Mazerationsstufe vorgeschaltet werden, um einer Zerstörung der druckempfindlichen Beerenhaut bei der Fermentation entgegenzuwirken.
Die Anwendung des erfindungsgemäßen Verfahrens zur Modifikation pflanzlicher Rohstoffe für die menschliche oder tierische Ernährung und für therapeutische Zwecke ist vielfältig übertragbar.

Beispielhaft sei die Substitution adstringierender oder bitterer Inhaltsstoffe durch süße oder geschmacksneutrale Inhaltsstoffe genannt.

Auch ist eine äquivalente Vorgehensweise zur Modifikation der Inhaltsstoffzusammensetzung weiterer Beerenfrüchte, wie Sanddorn, Apfelbeere oder Moosbeere möglich, um diese gezielt als oder in diätetischen Lebensmitteln einsetzen zu können.

Nach einer erweiterten Ausführungsform der Erfindung erfolgt eine Modifizierung der Inhaltsstoffe der Produkte dahingehend, dass Pflanzenteile mit den gewünschten Inhaltsstoffen dem Lösungsmittel im ersten Verfahrensschritt in entsprechend hoher Konzentration zugegeben werden. Somit diffundieren dann gleichzeitig die unerwünschten Inhaltsstoffe aus den Produkten in das Lösungsmittel und gegebenenfalls in die darin enthaltenen Pflanzenteile und aus den Pflanzenteilen die erwünschten Inhaltsstoffe in das Lösungsmittel und in die Produkte.

Vorteilhaft lässt sich diese Ausführungsform beispielsweise mit Zichorienwurzeln, welche Inulin enthalten, umsetzen.
Gibt man die Zichorienwurzeln vorzugsweise in gehäckseltem Zustand dem Lösungsmittel bei, so wird ihnen Inulin vom Lösungsmittel entzogen. Durch die entgegengesetzte osmotische Wirkungen gelangt das Inulin gleichzeitig in die Sultaninen, welche ihrerseits parallel dazu entzuckert werden.
Durch fraktionierte Prozessführung, d.h. durch zielgerichtete, stetige Konzentrationserhöhung in der Konzentration der Süßungsmittellösung, kann der Diffusionsprozess von Zuckern, Süßungsmitteln oder Zuckeraustauschstoffen beschleunigt und der Gehalt an diesen Inhaltsstoffen in den Produkten gezielt beeinflusst werden.

## Patentansprüche

1. Verfahren zur Modifizierung der Inhaltsstoffzusammensetzung von pflanzlichen Produkten, insbesondere Früchten, wie Sultaninen, Sanddorn, Apfelbeeren oder Moosbeeren unter Ausnutzung des osmotischen Druckgefälles zwischen dem Inneren pflanzlicher Produkte und diese umgebenden Lösungen, wobei Inhaltsstoffe aus den pflanzlichen Produkten in das Lösungsmittel diffundieren und gleichzeitig die Menge der Inhaltsstoffe, bezogen auf die Produkte und das Lösungsmittel verringert wird, **dadurch gekennzeichnet, dass** die Verringerung der diffundierenden, aus den pflanzlichen Produkten zu entfernenden Inhaltsstoffe im Lösungsmittel und gegebenenfalls in den Produkten durch einen enzymatischen Abbau der Inhaltsstoffe oder deren Adsorption erfolgt.

2. Verfahren nach Anspruch 1, **dadurch gekennzeichnet, dass** der enzymatische Abbau der aus den Produkten zu entfernenden Inhaltsstoffe indirekt durch Mikroorganismen erfolgt.

3. Verfahren nach einem der Ansprüche 1 oder 2, **dadurch gekennzeichnet, dass** Inhaltsstoffe aus dem Lösungsmittel durch ein osmotisches Druckgefälle infolge hoher Konzentration des Inhaltsstoffes im Lösungsmittel in das Produkt diffundieren, wobei die Konzentration des Inhaltsstoffes im Lösungsmittel gleich bleibend oder ansteigend gewählt wird und dass die Diffusion durch Erhöhen der Temperatur unterstützt wird.

4. Verfahren nach Anspruch 3, **dadurch gekennzeichnet, dass** das Produkt nachfolgend getrocknet wird.

5. Verfahren nach einem der Ansprüche 1 bis 4, **dadurch gekennzeichnet, dass** die Oberfläche der pflanzlichen Produkte vor den Diffusionsprozessen perforiert wird oder die Dicke der Pflanzenhaut oder -schale reduziert wird.

6. Glucosereduzierte Sultaninen, erhältlich durch eine Behandlung von Sultaninen in folgenden Schritten:
a) Mischen von Sultaninen und Wasser als Lösungsmittel mit einer Konzentration von 10 bis 30 Massenprozent Sultaninen im Wasser,
b) Diffusion der Zucker, wie Glucose, Fructose und Saccharose in das Lösungsmittel und gleichzeitiger Abbau durch die Zugabe von zumindest Glucose ab- oder umbauenden Enzymen und/oder zumindest die Glucose verstoffwechselnden Mikroorganismen und Diffusion von Lösungsmittel und teilweise von Enzymen in die Sultaninen,
c) Trennung der glucosereduzierten Sultaninen vom Lösungsmittel,
d) Mischen von glucosereduzierten Sultaninen mit einer diabetikergerechten Süßungsmittellösung,
e) Diffusion der Süßungsmittellbestandteile in die Sultaninen,
f) Trennen der glucosereduzierten und süßungsmittelangereicherten Sultaninen von der Süßungsmittellösung,
g) Trocknung der glucosereduzierten und süßungsmittelangereicherten Sultaninen.

7. Sultaninen nach Anspruch 6, **dadurch gekennzeichnet, dass** vor Verfahrensschritt a) eine Behandlung der Sultaninen mit ein bis zwei molarer Kalilauge (KOH) über einen Zeitraum von ca. 10 Minuten erfolgt und/oder dass eine Erhitzung der Sultaninen auf Temperaturen von größer als 75 °C vorgenommen wird, um den Widerstand der Produkthaut gegen die Diffusion von Inhaltsstoffen zu verringern.

8. Sultaninen nach einem der Ansprüche 6 oder 7, **dadurch gekennzeichnet, dass** im Verfahrensschritt b) als Enzyme Glucoseoxidase, Glucoseisomerase oder Hefen dem Lösungsmittel zugegeben werden und dass der Glucoseabbau bei Temperaturen zwischen 30°C und 35 °C stattfindet.

9. Sultaninen nach Anspruch 8, **dadurch gekennzeichnet, dass** Hefen der Gattung *Saccharomyces cerevisiae* in einer Konzentration von 0,3 bis 3,5 Massenprozent eingesetzt werden.

10. Sultaninen nach einem der Ansprüche 6 bis 9, **dadurch gekennzeichnet, dass** die Süßungsmittellösung nach Verfahrensschritt d) Süßstoffe wie Saccharin, Cyclamat oder Monellin und/oder Zuckeraustauschstoffe wie Mannit, Fructose, Oligofructose, Sorbit oder Xylit enthält.

11. Sultaninen nach Anspruch 10, **dadurch gekennzeichnet, dass** die Süßungsmittellösung aus 150,0 Massenprozent kristalliner Fructose und 150,0 Massenprozent kristallinem Sorbit, bezogen auf 100,0 Massenprozent Wasser, hergestellt wird.

12. Sultaninen nach einem der Ansprüche 6 bis 11, **dadurch gekennzeichnet, dass** zur Trocknung nach Verfahrensschritt g) Umluft mit einer Strömungsgeschwindigkeit von etwa 1-3 m/s, einer Lufttemperatur von 100-130°C und einer Prozessdauer zwischen 80 bis 100 min verwendet wird.

13. Sultaninen nach einem der Ansprüche 6 bis 12, **dadurch gekennzeichnet, dass** das Lösungsmittel nach Verfahrensschritt a) Zichorienwurzeln enthält, denen durch Diffusion in Verfahrensschritt b) Inulin entzogen wird und dass das Inulin durch entgegengesetzte osmotische Wirkungen in die Sultaninen diffundiert, wobei gleichzeitig die Glucose aus den Sultaninen in das Lösungsmittel und die Zichorienwurzeln diffundiert.

## Claims

1. Method for modifying the constituent structure of plant products, in particular fruits such as sultanas, sallow thorn, chokeberries, or cranberries, said method utilizing the osmotic pressure difference between the inside of a plant product and the surrounding solutions, where the constituents of said plant products diffuse into the solvents and where the portion of plant product constituents is simultaneously reduced relative to the products and the solvent, **characterized in that** the reduction of the diffusing constituents to be extracted from the plant products is effected in the solvent or in the product by means of an enzymatic decomposition of the constituents or their absorption.

2. Method according to claim 1, **characterized in that** the enzymatic decomposition of the constituents to be extracted from the products is effected indirectly by means of micro organisms.

3. Method according to one of the claims 1 or 2, **characterized in that** the constituents are diffused into the product by means of an osmotic pressure difference as a result of the high concentration of said constituent in the solvent and where the concentration of said constituent in the solvent can be controlled to remain level or to rise and where the diffusion is assisted by increasing the temperature.

4. Method according to claim 3, **characterized in that** the product is subsequently desiccated.

5. Method according to one of the claims 1 to 4, **characterized in that** the surface of the plant products is perforated prior to the diffusion process or where the thickness of the plant's peel or husk is reduced.

6. Glucose-reduced sultanas produced by treatment according to the following steps:
a) Blending sultanas and water as solvent in a concentration of 10 to 30 per cent in weight of sultanas in water,
b) Diffusion of the sugars, such as glucose, fructose and saccharose into the solvent and simultaneous decomposition by means of adding at least enzymes for decomposing or converting glucose and/or at least glucose-catabolizing micro organisms and solvents and partly enzymes diffusing in the sultanas,
c) Separation of the glucose-reduced sultanas from solvent,
d) Blending of glucose-reduced sultanas with a sweetening agent solution suitable for diabetics,
e) Diffusion of the sweetening agents in the sultanas,
f) Separation of the glucose-reduced sultanas enriched with sweetening agent from the sweetening agent solution,
g) Desiccation of the glucose-reduced sultanas enriched with sweetening agent.

7. Sultanas according to claim 6, **characterized in that** prior to processing step a) the sultanas are treated with up to two molar potash lyes (KOH) extending over a period of approx. 10 minutes and/or where the sultanas are heated to a temperature exceeding 75 °C in order to reduce resistance of the product's surface to the diffusion of constituents.

8. Sultanas according to one of the claims 6 or 7, **characterized in that** during processing step b) glucose-oxidase, glucose-isomerase or yeasts are added to the solvent and where decomposition of the glucose occurs at temperatures between 30 °C and 35 °C.

9. Sultanas according to claim 8, **characterized in that** yeasts of the species *Saccharomyces cerevisiae* are applied at a concentration of 0.3 to 3.5 per cent in weight.

10. Sultanas according to one of the claims 6 to 9, **characterized in that** the sweetening agent solution according to processing step d) contains non-caloric sweeteners such as saccharin, cyclamate or monellin and/or sugar substitutes such as mannitol, fructose, oligofructose, sorbite or xylite.

11. Sultanas according to claim 10, **characterized in that** the sweetening agent solution is prepared from a 150.0 per cent fraction in weight of crystalline fructose and a 150.0 per cent fraction in weight of crystalline sorbite relative to a 100.0 per cent fraction in weight of water.

12. Sultanas according to one of the claims 6 to 11, **characterized in that** according to processing step g) circulated air at a flow velocity of approximately 1-3 m/s, an air temperature of 100-130°C and a process duration of between 80 and 100 minutes is applied for desiccation.

13. Sultanas according to one of the claims 6 to 12, **characterized in that** the solvent according to processing step a) contains chicory root where inulin has been extracted from said chicory root by means of diffusion in processing step b) and where the inulin is diffused in the sultanas by means of opposite osmotic action and where the glucose is simultaneously diffused from the sultanas to the solvent and the chicory root.

## Revendications

1. Méthode pour modifier la composition des ingrédients de produits végétaux, particulièrement de fruits, comme des raisins secs, des argousiers, des aronias ou des airelles canneberges, en utilisant la baisse de pression osmotique entre l'intérieur des produits végétaux et des solutions qui les entourent, des ingrédients provenant des produits végétaux se diffusant dans le solvant, avec réduction simultanée de la quantité des ingrédients, **caractérisée en ce que** la réduction des ingrédients qui doivent être éliminés des produits végétaux, en diffusion dans le solvant ou le cas échéant dans les produits, s'obtient par une dégradation enzymatique des ingrédients ou leur adsorption.

2. Méthode selon la revendication 1, **caractérisée en ce que** la dégradation enzymatique des ingrédients devant être éliminés des produits s'obtient indirectement par des microorganismes.

3. Méthode selon les revendications 1 ou 2, **caractérisée en ce que** des ingrédients provenant du solvant se diffusent dans le produit sous l'effet d'une baisse de pression osmotique provoquée par une concentration élevée de l'ingrédient dans le solvant, en choisissant de régler la concentration de l'ingrédient dans le solvant pour qu'elle reste stable ou pour qu'elle augmente, et en stimulant la diffusion par une augmentation de la température.

4. Méthode selon la revendication 3, **caractérisée en ce que** le produit est ensuite séché.

5. Méthode selon les revendications 1 à 4, **caractérisée en ce que** avant le processus de diffusion, on perce la surface des produits végétaux ou l'on réduit l'épaisseur de la peau ou de l'écorce de la plante.

6. Raisins secs à teneur réduite en glucose obtenus en traitant des raisins secs selon les étapes suivantes :
a) des raisins secs sont mélangés avec de l'eau comme solvant avec une concentration de 10 à 30 pour cent en masse de raisins dans l'eau,
b) Diffusion des glucides, comme le glucose, le fructose et la saccharose dans le solvant et dégradation simultanée par addition d'enzymes décomposant ou transformant au moins le glucose, et/ou de microorganismes catabolisant au moins le glucose, et diffusion dans les raisins secs du solvant et partiellement des enzymes,
c) les raisins secs à teneur réduite en glucose sont séparés du solvant,
d) Ajout aux raisins secs à teneur réduite en glucose d'une solution d'édulcorant adaptée aux diabétiques,
e) Diffusion des éléments de la solution d'édulcorant dans les raisins secs,
f) Les raisins secs à teneur réduite en glucose et enrichis de l'édulcorant sont séparés de la solution d'édulcorant,
g) Les raisins secs à teneur réduite en glucose et enrichis de l'édulcorant sont séchés.

7. Raisins secs selon la revendication 6, **caractérisés en ce que,** avant la première étape a) de la procédure, les raisins secs sont traités avec de la lessive de potasse (KOH) à une ou deux moles pendant environ 10 minutes et/ou qu'ils sont chauffés à des températures supérieures à 75 °C, de manière à réduire la résistance de la peau du produit à la diffusions des ingrédients.

8. Raisins secs selon les revendications 6 ou 7, **caractérisés en ce que,** dans l'étape b) de la procédure, on ajoute au solvant comme enzymes de la glucose-oxydase, de la glucose-isomérase ou des levures et que le dégradation du glucose se produit à des températures comprises entre 30 °C et 35 °C.

9. Raisins secs selon la revendication 8, **caractérisés en ce que** l'on utilise des levures du genre Saccharomyces cerevisiae dans une proportion de 0,3 à 3,5 pour cent en masse.

10. Raisins secs selon les revendications 6 à 9, **caractérisés en ce que** la solution d'édulcorant selon l'étape d) de la procédure contient des édulcorants tels que la saccharine, le cyclamate ou la monelline et/ou des produits de substitution du sucre tels que la mannite, le fructose, l'oligofructose, la sorbite (sorbitol) ou la xylite (xylitol).

11. Raisins secs selon la revendication 10, **caractérisés en ce que** la solution d'édulcorant est fabriquée à partir de 150,0 pourcent en masse de fructose cristallin et de 150,0 pour cent en masse de sorbite (sorbitol) cristalline pour 100,0 pour cent en masse d'eau.

12. Raisins secs selon les revendications 6 à 11, **caractérisés en ce que,** pour le chauffage selon l'étape g) de la procédure, on utilise une circulation d'air avec une vitesse d'écoulement d'environ 1-3 m/s, une température de l'air de 100-130°C et une durée de l'opération de 80 à 100 min.

13. Raisins secs selon les revendications 6 à 12, **caractérisés en ce que** le solvant selon l'étape a) de la procédure contient des racines de chicorée dont on retire de l'inuline par diffusion pendant l'étape b) de la procédure, et que ladite inuline se diffuse dans les raisins secs sous l'action d'effets osmotiques contraires, le glucose se diffusant simultanément à partir des raisins secs dans le solvant et les racines de chicorée.
